# EUROPÄISCHE PATENTANMELDUNG

(11) **EP 2 536 106 A1**
(43) Veröffentlichungstag der Anmeldung: **19.12.2012**
(21) Anmeldenummer: 11169995.5
(22) Anmeldetag: 15.06.2011
(51) Int. Cl.: H04L 29/12, H04L 29/08

(54) **Verfahren zur Adressübertragung**

(71) Anmelder: SIEMENS AKTIENGESELLSCHAFT, 80333 München (DE)
(72) Erfinder: Steindl, Günter, 92284 Poppenricht (DE)

(57) **Zusammenfassung**

Die Erfindung betrifft ein Verfahren zur Übertragung einer Adresse (220; 222) eines ersten Netzwerkgeräts von dem ersten Netzwerkgerät über einen Netzwerkknoten (104) zu einem zweiten Netzwerkgerät (102), wobei das Verfahren die folgenden Schritte umfasst:
- Empfang (S1) eines ersten Anfragesignals (200) durch den Netzwerkknoten (104) von dem zweiten Netzwerkgerät (102), wobei das erste Anfragesignal (200) eine erste Anfragekennung (206) und eine Anfrage (204) nach der Adresse des ersten Netzwerkgeräts umfasst; und daraufhin
- Erzeugung (S2) eines zweiten Anfragesignals (202) durch den Netzwerkknoten (104), wobei das zweite Anfragesignal (202) die Anfrage (204) und eine zweite Anfragekennung (212) umfasst;
- Senden (S3) des zweiten Anfragesignals (202) an das erste Netzwerkgerät; und daraufhin
- Empfang (S4) eines ersten Antwortsignals (216) als Antwort auf das zweite Anfragesignal (202) durch den Netzwerkknoten (104), wobei das erste Antwortsignal (216) die Adresse (220; 222) des ersten Netzwerkgeräts und die zweite Anfragekennung (212) umfasst; und daraufhin
- Senden (S5) eines zweiten Antwortsignals (218) als Antwort auf das erste Anfragesignal (200) an das zweite Netzwerkgerät, wobei das zweite Antwortsignal (218) die Adresse (220; 222) des ersten Netzwerkgeräts und die erste Anfragekennung (206) umfasst.

## Beschreibung

Die Erfindung betrifft ein Verfahren zur Adressübertragung eines Netzwerkgerätes in einem Netzwerk, insbesondere ein Verfahren zur Übertragung einer Adresse eines ersten Netzwerkgerätes von dem ersten Netzwerkgerät über einen Netzwerkknoten zu einem zweiten Netzwerkgerät.

Das OSI-Schichtmodell bezieht sich auf die Kommunikation in einem Netzwerk. Es gibt Protokolle, die die sogenannte Sicherungsschicht, Schicht 2, dazu verwenden, Adressen der Netzwerkgeräte untereinander auszutauschen, sodass jedes Netzwerkgerät Informationen über Adressen von anderen Netzwerkgeräten des gleichen Netzwerks hat. Diese Adressen können zur Kommunikation im Netzwerk benutzt werden.

Demgegenüber liegt der Erfindung die Aufgabe zugrunde, ein verbessertes Verfahren zur Übertragung einer Adresse, einen verbesserten Netzwerkknoten und ein verbessertes Computerprogrammprodukt zu schaffen.

Die der Erfindung zugrunde liegenden Aufgaben werden mit den Merkmalen der unabhängigen Patentansprüche gelöst. Ausführungsformen der Erfindung sind in den abhängigen Patentansprüchen angegeben.

Die Erfindung betrifft ein Verfahren zur Übertragung einer Adresse eines ersten Netzwerkgeräts von dem ersten Netzwerkgerät über einen Netzwerkknoten zu einem zweiten Netzwerkgerät. Zunächst wird ein erstes Anfragesignal durch den Netzwerkknoten von dem zweiten Netzwerkgerät empfangen. Das erste Anfragesignal umfasst eine erste Anfragekennung und eine Anfrage nach der Adresse des ersten Netzwerkgerätes. Danach erfolgt die Erzeugung eines zweiten Anfragesignals durch den Netzwerkknoten. Das zweite Anfragesignal umfasst die Anfrage und eine zweite Anfragekennung. Das zweite Anfragesignal wird an das erste Netzwerkgerät durch den Netzwerkknoten gesendet.

Ausgelöst durch das Senden des zweiten Anfragesignals wird nach einer zeitlichen Verzögerung, die von den Netzwerkparametern abhängt, ein erstes Antwortsignal als Antwort auf das zweite Anfragesignal durch den Netzwerkknoten empfangen. Das erste Antwortsignal umfasst die Adresse des ersten Netzwerkgerätes und die zweite Anfragekennung. Durch den Empfang des ersten Antwortsignals wird das Senden eines zweiten Antwortsignals als Antwort auf das erste Anfragesignal an das zweite Netzwerkgerät ausgelöst. Das zweite Antwortsignal umfasst die Adresse des ersten Netzwerkgerätes und die erste Anfragekennung.

Das erste Netzwerkgerät ist also mit dem zweiten Netzwerkgerät nicht direkt verbunden. Das erste Netzwerkgerät ist über den Netzwerkknoten mit dem zweiten Netzwerkgerät verbunden. Beispielsweise soll durch das zweite Netzwerkgerät eine sogenannte Lifelist geführt werden. Dies ist beispielsweise ist eine Liste, die die Adressen der Netzwerkgeräte des Netzwerks umfasst. Eine solche Liste kann beispielsweise dazu verwendet werden, um Nachrichten in dem Netzwerk von einem Netzwerkgerät zu einem anderen Netzwerkgerät zu verschicken. Dies können auch sogenannte Multicast- oder Broadcast-Nachrichten sein. In diesem Falle wird eine Nachricht an mehrere oder alle Netzwerkgeräte des Netzwerkes gesendet. Hierzu ist es nötig, dass die Adressen der Netzwerkgeräte, an die eine Nachricht gesendet werden soll, bekannt sind.

Wenn nun beispielsweise ein Protokoll der zweiten Schicht des OSI-Schichtmodells für die Übermittlung der Adresse von dem ersten Netzwerkgerät an das zweite Netzwerkgerät verwendet wird, ist ein Verfahren nach Ausführungsformen der Erfindung vorteilhaft, weil es die Übertragung der Adresse über einen Netzwerkknoten ermöglicht. Bei einer Übertragung der Adresse gemäß eines Verfahrens aus dem Stand der Technik wäre es für das zweite Netzwerkgerät unmöglich, mit einem Protokoll der zweiten Schicht des OSI-Schichtmodells die Adresse des ersten Netzwerkgerätes zu erfahren, wenn sich zwischen dem zweiten Netzwerkgerät und dem ersten Netzwerkgerät der Netzwerkknoten befindet. Das zweite Netzwerkgerät würde lediglich die Adresse des Netzwerkknotens empfangen. Wenn auch die Adresse des ersten Netzwerkgerätes in die vom zweiten Netzwerkgerät beispielsweise geführte Lifelist übernommen werden soll, müsste das zweite Netzwerkgerät in das Subnetz des ersten Netzwerkgerätes eingeführt werden. Unter einem Subnetz wird hier ein Netzwerkteil verstanden, der von anderen Netzwerkteilen durch einen Netzwerkknoten abgeteilt ist. Unter einem Netzwerkknoten kann hier beispielsweise ein Router oder ein Switch verstanden werden.

Mit einem Verfahren nach Ausführungsformen der Erfindung ist es also möglich, mit einer Anfrage nach einer Netzwerkadresse gemäß eines Protokolles der zweiten Schicht des OSI-Schichtmodells die Netzwerkadresse des ersten Netzwerkgerätes zu empfangen, selbst wenn sich das erste Netzwerkgerät in einem anderen Subnetz als das zweite Netzwerkgerät befindet.

Vorteilhafterweise speichert der Netzwerkknoten die erste Anfragekennung, sodass bei Empfang des ersten Antwortsignals die empfangene Adresse des ersten Netzwerkgerätes mit der gespeicherten ersten Anfragekennung in Verbindung gebracht werden kann. Mit anderen Worten kann so das erste Antwortsignal mit dem ersten Anfragesignal in Verbindung gebracht werden, sodass der Netzwerkknoten in der Lage ist, das zweite Antwortsignal als Antwort auf das erste Anfragesignal zu senden.

Nach einer Ausführungsform der Erfindung umfasst das erste Anfragesignal eine Adresse des zweiten Netzwerkgerätes. Der Netzwerkknoten speichert die Adresse des zweiten Netzwerkgerätes und die erste Anfragekennung. Sobald die zweite Anfragekennung erzeugt wurde, speichert der Netzwerkknoten diese zweite Anfragekennung, die Adresse des zweiten Netzwerkgerätes und die erste Anfragekennung miteinander verknüpft. Somit wird es ermöglicht, dass der Netzwerkknoten nach Empfang des ersten Antwortsignals mit der Adresse des ersten Netzwerkgerätes die Adresse des ersten Netzwerkgerätes mit der zweiten Anfragekennung in Verbindung bringt, wodurch die Adresse des ersten Netzwerkgerätes auch mit der ersten Anfragekennung in Verbindung gebracht wird. Die Speicherung der Adresse des zweiten Netzwerkgerätes dient dazu, dass beim Senden des zweiten Antwortsignals die Zieladresse des Antwortsignales dem Netzwerkknoten bekannt ist. Das zweite Antwortsignal wird also mit der Adresse des zweiten Netzwerkgerätes als Zieladresse gesendet.

Nach Ausführungsformen der Erfindung wird das zweite Anfragesignal über einen weiteren Netzwerkknoten an das erste Netzwerkgerät gesendet. Das erste Antwortsignal wird von einem weiteren Netzwerkknoten empfangen. Mit anderen Worten befindet sich zwischen dem Netzwerkknoten und dem ersten Netzwerkgerät noch ein weiterer Netzwerkknoten. Dies ist vorteilhaft, wenn das Netzwerk mehr als ein Teilnetzwerk umfasst. Somit können die Adressen aller aktiven Netzwerkgeräte in der Lifelist des zweiten Netzwerkgerätes gespeichert werden und sind somit dem zweiten Netzwerkgerät bekannt.

Nach Ausführungsformen der Erfindung sind das erste Anfragesignal, das zweite Anfragesignal, das erste Antwortsignal und das zweite Antwortsignal Signale eines Protokolls gemäß der zweiten Schicht des OSI-Modells. Dies ist besonders vorteilhaft, da bei einer Kommunikation mittels eines Protokolls der zweiten Schicht des OSI-Modells eine Kommunikation zwischen Netzwerkgeräten ermöglicht wird, ohne dass sogenannte IP-Adressen der Netzwerkgeräte für diese Kommunikation benötigt werden. Es können also auch Netzwerkgeräte für die Kommunikation verwendet werden, die keine IP-Adresse haben.

Nach Ausführungsformen der Erfindung ist in dem zweiten Netzwerkgerät eine Adressdatenbank gespeichert. Die Adresse des ersten Netzwerkgeräts wird der Adressdatenbank hinzugefügt, wenn die Adresse des ersten Netzwerkgerätes durch das zweite Netzwerkgerät von dem Netzwerkknoten empfangen wird. Eine solche Adressdatenbank kann beispielsweise auch als Lifelist bezeichnet werden. Eine solche Adressdatenbank ist nützlich, wenn Nachrichten an bestimmte Netzwerkgeräte gesendet werden sollen. Dies können beispielsweise sogenannte Unicast-Nachrichten, Multicast-Nachrichten oder Broadcast-Nachrichten sein. Außerdem sind dem zweiten Netzwerkgerät so immer alle aktiven Netzwerkgeräte bekannt. Dies kann beispielsweise für eine Projektierung des Netzwerks mittels eines Engineering-Tools nützlich sein.

Nach Ausführungsformen der Erfindung wird das zweite Anfragesignal über mehrere Anschlüsse des Netzwerkknotens ausgegeben. An den Anschlüssen des Netzwerkknotens sind weitere Netzwerkgeräte und/oder Netzwerkknoten angeschlossen. Mit anderen Worten wird das zweite Anfragesignal als Multicast- oder vorzugsweise als Broadcast-Nachricht ausgegeben. Dies ist vorteilhaft, da so alle an den Netzwerkknoten angeschlossenen Netzwerkgeräte erreicht werden und als Antwort ihre Adresse dem Netzwerkknoten mitteilen. Der Netzwerkknoten empfängt so die Adressen aller an ihn angeschlossenen Netzwerkgeräte und kann diese als Antwort auf das erste Anfragesignal an das zweite Netzwerkgerät ausgeben. Dies ist vorteilhaft, da so alle Adressen der an den Netzwerkknoten angeschlossenen Netzwerkgeräte dem zweiten Netzwerkknoten mitgeteilt werden.

In einem anderen Aspekt betrifft die Erfindung einen Netzwerkknoten für ein Netzwerk mit Mitteln zum Empfang eines ersten Anfragesignals. Das erste Anfragesignal umfasst dabei eine erste Anfragekennung und eine Anfrage nach der Adresse eines ersten Netzwerkgerätes. Außerdem umfasst der Netzwerkknoten Mittel zur Erzeugung eines zweiten Anfragesignals. Das zweite Anfragesignal umfasst dabei die Anfrage und eine zweite Anfragekennung. Ferner umfasst der Netzwerkknoten Mittel zum Senden des zweiten Anfragesignals. Diese Mittel können beispielsweise Netzwerkanschlüsse umfassen.

Außerdem umfasst der Netzwerkknoten Mittel zum Empfang eines ersten Antwortsignals als Antwort auf das zweite Anfragesignal. Das erste Antwortsignal umfasst dabei die Adresse des ersten Netzwerkgerätes und die zweite Anfragekennung. Diese Mittel zum Empfang können beispielsweise ebenfalls die Netzwerkanschlüsse sein. Ferner umfasst der Netzwerkknoten Mittel zum Senden eines zweiten Antwortsignals als Antwort auf das erste Anfragesignal. Das zweite Antwortsignal umfasst die Adresse des ersten Netzwerkgerätes und die erste Anfragekennung.

In noch einem weiteren Aspekt betrifft die Erfindung ein Computerprogrammprodukt mit Instruktionen, wobei die Instruktionen bei Ausführung durch einen Netzwerkknoten den Netzwerkknoten zur Durchführung eines Verfahrens nach Ausführungsformen der Erfindung veranlassen.

Nachfolgend werden Ausführungsformen der Erfindung anhand der Figuren näher erläutert. Es zeigen:
- Figur 1: eine schematische Darstellung eines Netzwerks mit mehreren Teilnetzwerken und Netzwerkknoten,
- Figur 2: eine schematische Darstellung eines ersten Anfrage-signals und eines zweiten Anfragesignals,
- Figur 3: eine schematische Darstellung eines ersten Antwort-signals und eines zweiten Antwortsignals,
- Figur 4: ein Flussdiagramm eines Verfahrens nach Ausfüh-rungsformen der Erfindung.

Elemente der nachfolgenden Figuren werden mit denselben Bezugszeichen gekennzeichnet, wenn die Funktion dieser Elemente identisch ist.

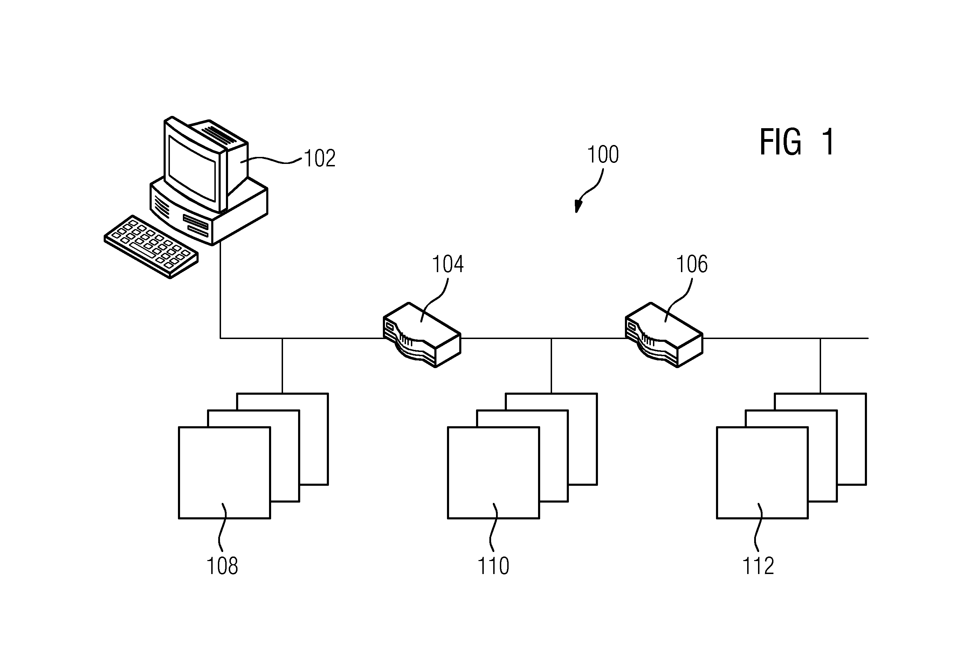

Figur 1 ist eine schematische Darstellung eines Netzwerks 100 mit drei Teilnetzwerken 108, 110 und 112. Die Teilnetzwerke 108, 110 und 112 umfassen jeweils zumindest ein Netzwerkgerät. Die Teilnetzwerke 108, 110 und 112 können auch mehrere Netzwerkgeräte umfassen. Die Teilnetzwerke 108, 110 und 112 sind durch die Netzwerkknoten 104 und 106 voneinander getrennt. Die Netzwerkknoten 104 und 106 dienen dazu, Nachrichten oder Signale von einem der Teilnetzwerke 108, 110 und 112 in ein anderes der Teilnetzwerke 108, 110 und 112 weiterzuleiten. Beispielsweise leitet der Netzwerkknoten 104 Nachrichten und Signale aus dem Teilnetzwerk 108 in das Teilnetzwerk 110 und/oder an den Netzwerkknoten 106 weiter, der wiederum dafür zuständig ist, Signale und/oder Nachrichten von dem Teilnetzwerk 110 an das Teilnetzwerk 112 und umgekehrt weiterzuleiten.

Die Netzwerkknoten 104 und 106 können beispielsweise Router, Gateways oder Switches sein. Es ist auch möglich, dass die Netzwerkknoten 104 und 106 komplexere Computer mit einem eigenen Prozessor sind.

Nach Ausführungsformen der Erfindung wird ein Verfahren geschaffen, mit dem es möglich ist, eine Adresse eines ersten Netzwerkgerätes über zumindest einen der Netzwerkknoten 104 oder 106 an das zweite Netzwerkgerät 102 zu übertragen. Dies kann nach Ausführungsformen der Erfindung auch mittels eines Protokolls der zweiten Schicht des OSI-Schichtmodells geschehen. Das erste Netzwerkgerät kann sich beispielsweise in dem Teilnetzwerk 110 oder in dem Teilnetzwerk 112 befinden.

Beispielsweise sendet das zweite Netzwerkgerät 102 ein erstes Anfragesignal an die Netzwerkgeräte des Teilnetzwerks 108 und an den Netzwerkknoten 104. Das erste Anfragesignal umfasst eine Anfrage nach den Adressen der Netzwerkgeräte, die dieses Anfragesignal empfangen. Das erste Anfragesignal dient dazu, eine Adressdatenbank, beispielsweise eine sogenannte Lifelist, in dem zweiten Netzwerkgerät 102 aufzubauen oder zu aktualisieren. Mit Hilfe des ersten Anfragesignals sollen alle Adressen der Netzwerkgeräte des Netzwerks 100 als Antwort auf das erste Anfragesignal an das zweite Netzwerkgerät 102 übertragen werden.

Alle Netzwerkgeräte des Teilnetzwerks 108, die das erste Anfragesignal empfangen haben, senden ein Antwortsignal an das zweite Netzwerkgerät 102. Somit sind dem zweiten Netzwerkgerät alle Adressen der Netzwerkgeräte des Teilnetzwerks 108 mitgeteilt worden.

Damit die Adressen der Netzwerkgeräte des Teilnetzwerks 110 auch dem zweiten Netzwerkgerät 102 mitgeteilt werden können, sendet der Netzwerkknoten 104 nach Empfang des ersten Anfragesignals ein zweites Anfragesignal an die Netzwerkgeräte des Teilnetzwerks 110 und an den Netzwerkknoten 106. Der Netzwerkknoten 104 speichert eine Anfragekennung des ersten Anfragesignals und die Adresse des zweiten Netzwerkgerätes, um nach Beantwortung des zweiten Anfragesignals das erste Anfragesignal beantworten zu können. Das zweite Anfragesignal umfasst ebenfalls eine Anfragekennung, die von der Anfragekennung des ersten Anfragesignals verschieden sein kann.

Alle Netzwerkgeräte des Teilnetzwerks 110, die das zweite Anfragesignal von dem Netzwerkknoten 104 empfangen haben, senden ein Antwortsignal an den Netzwerkknoten 104, das ihre Adresse umfasst. Außerdem umfasst das Antwortsignal der Netzwerkgeräte des Teilnetzwerks 110 die Anfragekennung des zweiten Anfragesignals. Der Netzwerkknoten 104 verknüpft durch Vergleich der Anfragekennungen die empfangenen Adressen der Netzwerkgeräte des Teilnetzwerks 110 zunächst mit dem zweiten Anfragesignal. Da die zweite Anfragekennung mit der ersten Anfragekennung und der Adresse des zweiten Netzwerkgerätes verknüpft im Netzwerkknoten 104 gespeichert ist, kann der Netzwerkknoten 104 ein Antwortsignal auf das erste Anfragesignal an das zweite Netzwerkgerät ausgeben, das zumindest eine Adresse der Netzwerkgeräte des Teilnetzwerks 110 umfasst. Beispielsweise wird für jede Adresse eines Netzwerkgerätes des Teilnetzwerks 110 ein Antwortsignal auf das erste Anfragesignal an das zweite Netzwerkgerät 102 gesendet.

Das zweite Anfragesignal wird von dem Netzwerkknoten 104 auch an den Netzwerkknoten 106 gesendet. Der Netzwerkknoten 106 ist ähnlich wie der Netzwerkknoten 104 programmiert. Bei Empfang des zweiten Anfragesignals von dem Netzwerkknoten 104 erzeugt der Netzwerkknoten 106 ein drittes Anfragesignal und gibt dieses an die Netzwerkgeräte des Teilnetzwerks 112 aus. Wenn der Netzwerkknoten 106 das zweite Anfragesignal mit einem Antwortsignal, das mindestens eine Adresse der Netzwerkgeräte des Teilnetzwerks 112 umfasst, beantwortet, leitet der Netzwerkknoten 104 diese Adresse als Antwort auf das erste Anfragesignal an das zweite Netzwerkgerät 102 weiter.

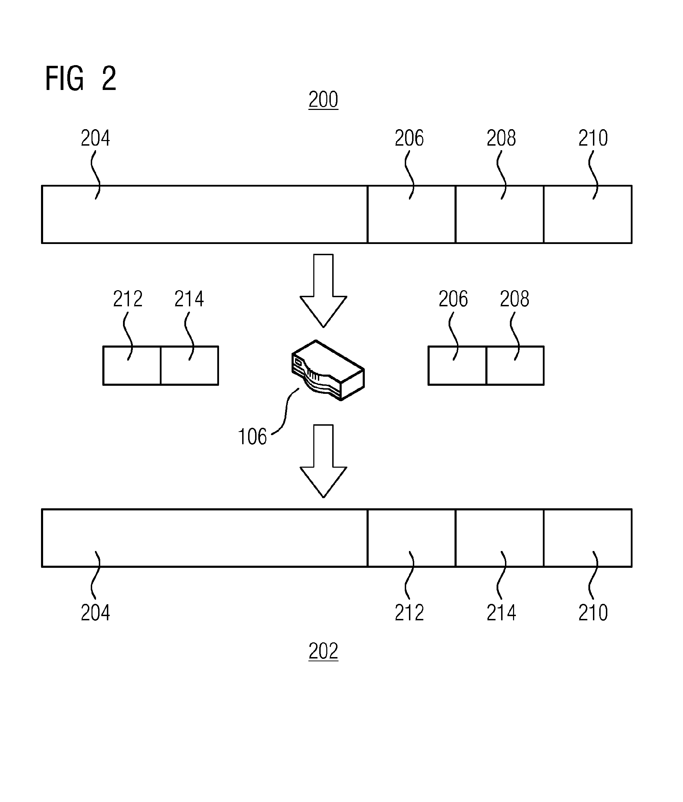

Figur 2 ist eine schematische Darstellung eines ersten Anfragesignals 200 und eines zweiten Anfragesignals 202. Das erste Anfragesignal 200 lässt sich in vier Abschnitte aufteilen. In einem ersten Signalabschnitt ist die Anfrage nach der Adresse des Netzwerkgeräts gespeichert, das das erste Anfragesignal 200 empfängt. Beispielsweise kann das erste Anfragesignal 200 ein Signal des sogenannten DCP-Protokolls sein (Discovery and Basic Configuration Protocol). Das DCP-Protokoll ist ein Protokoll auf der Ebene der zweiten Schicht des OSI-Schichtmodells.

In einem zweiten Signalabschnitt umfasst das erste Anfragesignal eine erste Anfragekennung 206. In einem dritten Abschnitt umfasst das erste Anfragesignal 200 die Adresse 208 des zweiten Netzwerkgerätes 102 aus Figur 1.

In einem vierten Abschnitt umfasst das erste Anfragesignal 200 die Adresse 210 des Netzwerkgerätes, an die das erste Anfragesignal 200 gesendet werden soll. Beispielsweise ist die Adresse 210 ein Adressbereich, der alle Adressen des Netzwerks umfasst, sodass das erste Anfragesignal 200 an alle Netzwerkgeräte des Netzwerks gesendet wird. Die Adresse 210 kann auch ein Eintrag sein, dass das erste Anfragesignal als Broadcast-Nachricht an alle Netzwerkgeräte des Netzwerks gesendet werden soll.

Das erste Anfragesignal wird von dem zweiten Netzwerkgerät 102 aus Figur 1 an den Netzwerkknoten 106 gesendet. Nach Empfang des ersten Anfragesignals 200 speichert der Netzwerkknoten 106 die erste Anfragekennung 206 und die Adresse des zweiten Netzwerkgerätes 208. Bevorzugter Weise werden die erste Anfragekennung 206 und die Adresse des zweiten Netzwerkgerätes 208 verknüpft miteinander gespeichert.

Der Netzwerkknoten 106 erzeugt ein zweites Anfragesignal 202, das die Anfrage 204 nach der Adresse in einem ersten Abschnitt des zweiten Anfragesignals 202 umfasst. Außerdem umfasst das zweite Anfragesignal 202 in einem zweiten Signalabschnitt eine zweite Anfragekennung 212 und in einem dritten Signalabschnitt die Adresse 214 des Netzwerkknotens 106. In einem vierten Signalabschnitt umfasst das zweite Anfragesignal die Adresse 210, die aus dem ersten Anfragesignal 200 übernommen wurde, damit das zweite Anfragesignal 202 bevorzugter Weise an alle an den Netzwerkknoten 106 angeschlossene Netzwerkgeräte ausgegeben wird.

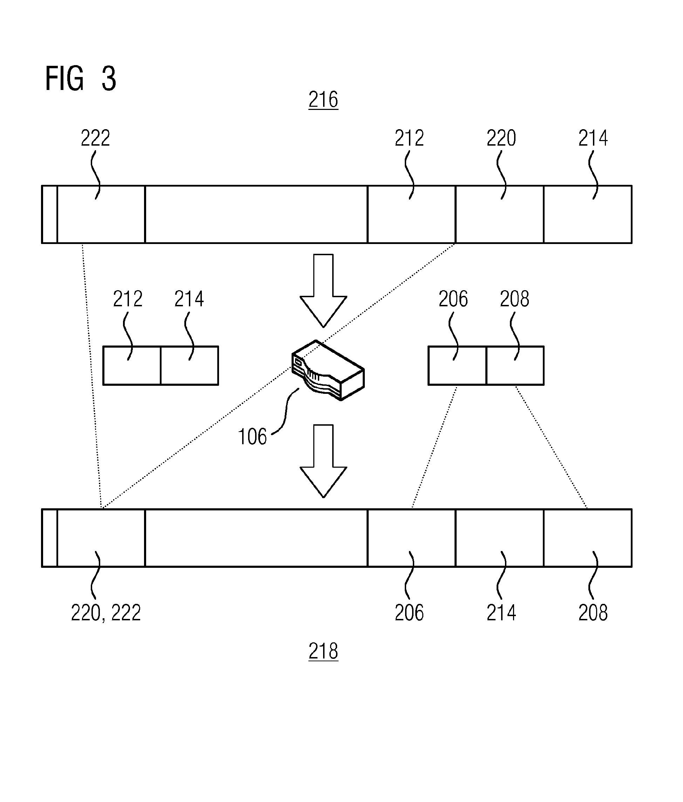

Der Netzwerkknoten 106 speichert die zweite Anfragekennung 212 bevorzugterweise verknüpft mit der ersten Anfragekennung 206 und der Adresse 208 des zweiten Netzwerkgerätes. Außerdem speichert der Netzwerkknoten 106 seine Adresse 214. Die verknüpfte Speicherung der ersten Anfragekennung 206 mit der zweiten Anfragekennung 212 und der Adresse 208 des zweiten Netzwerkgerätes ermöglicht es, dass der Netzwerkknoten 106 bei Beantwortung des zweiten Anfragesignals 202 diese Antwort dem ersten Anfragesignal 200 zuordnen kann. Dies wird nun näher im Hinblick auf Figur 3 erläutert.

Figur 3 ist eine schematische Darstellung eines ersten Antwortsignals 216 und eines zweiten Antwortsignals 218. Das erste Antwortsignal 216 wird als Antwort auf das zweite Anfragesignal von dem Netzwerkknoten 106 empfangen. Für den Fall, dass das erste Antwortsignal 216 direkt von dem ersten Netzwerkgerät empfangen wird, umfasst das erste Antwortsignal 216 die zweite Anfragekennung 212, die Adresse des Netzwerkknotens 214 als Zieladresse des Signals (Destination Address) und als Quelladresse des Signals die Adresse 220 des ersten Netzwerkgerätes(Source Address). Der Netzwerkknoten 106 kann das erste Antwortsignal 216 dem zweiten Anfragesignal aufgrund der zweiten Anfragekennung 212 zuordnen. Dadurch, dass die zweite Anfragekennung 212 verknüpft mit der ersten Anfragekennung 206 und mit der Adresse des zweiten Netzwerkgerätes 208 gespeichert ist, ist es dem Netzwerkknoten 106 ermöglicht, die Adresse 220 des ersten Netzwerkgerätes in dem zweiten Antwortsignal 218 an das erste Netzwerkgerät zu senden. Das zweite Anfragesignal 218 umfasst außerdem als Zieladresse des Signals die Adresse 208 des zweiten Netzwerkgerätes und die erste Anfragekennung 206, damit das zweite Antwortsignal 218 durch das zweite Netzwerkgerät dem ersten Anfragesignal zugeordnet werden kann. Das zweite Antwortsignal 218 umfasst außerdem als Quelladresse die Adresse 214 des Netzwerkknotens 106.

Falls das erste Antwortsignal 216 nicht direkt von dem ersten Netzwerkgerät empfangen wird, umfasst das erste Antwortsignal 216 als Quelladresse 220 die Adresse des Netzwerkknotens, von dem das erste Antwortsignal 216 empfangen wurde. In diesem Falle ist die Adresse 220 also nicht die Adresse des ersten Netzwerkgerätes, sondern die Adresse eines weiteren Netzwerkknotens, beispielsweise Netzwerkknoten 108 aus Figur 1. In diesem Falle umfasst das erste Antwortsignal 216, das beispielsweise von dem Netzwerkknoten 108 empfangen wurde, auch die Adresse 222 des ersten Netzwerkgerätes. In diesem Falle wird nicht die Adresse 220 des weiteren Netzwerkknotens, sondern die Adresse 222 des ersten Netzwerkgerätes mit dem zweiten Antwortsignal 218 an das erste Netzwerkgerät übertragen.

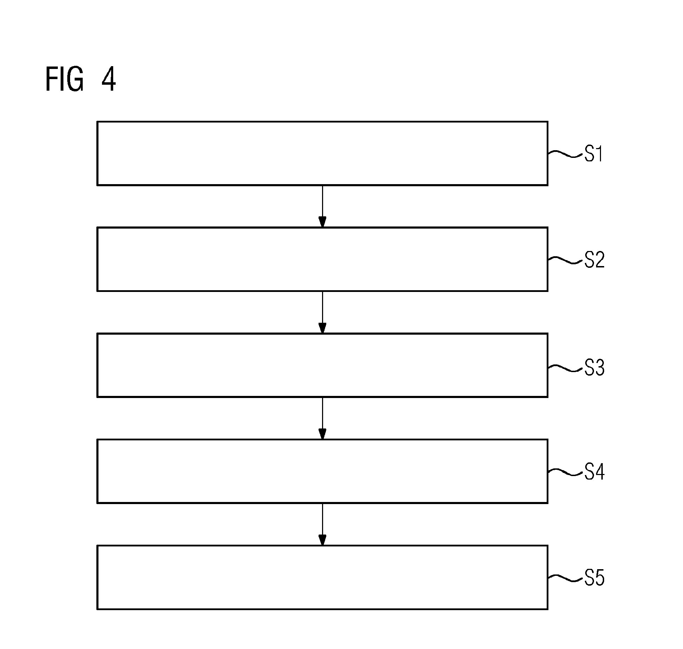

Figur 4 ist ein Flussdiagramm eines Verfahrens nach Ausführungsformen der Erfindung. In Schritt S1 wird ein erstes Anfragesignal durch den Netzwerkknoten von dem zweiten Netzwerkgerät empfangen. Das erste Anfragesignal umfasst eine erste Anfragekennung und eine Anfrage nach der Adresse des ersten Netzwerkgerätes. In Schritt S2 wird daraufhin ein zweites Anfragesignal durch den Netzwerkknoten erzeugt. Das zweite Anfragesignal umfasst die Anfrage und eine zweite Anfragekennung. Das zweite Anfragesignal wird in Schritt S3 an das erste Netzwerkgerät gesendet.

Nach Senden des zweiten Anfragesignals wird ein erstes Antwortsignal in Schritt S4 als Antwort auf das zweite Anfragesignal durch den Netzwerkknoten empfangen. Das erste Antwortsignal umfasst die Adresse des ersten Netzwerkgerätes und die zweite Anfragekennung. In Schritt S5 wird dann ein zweites Antwortsignal als Antwort auf das erste Anfragesignal an das zweite Netzwerkgerät gesendet. Das zweite Antwortsignal umfasst die Adresse des ersten Netzwerkgerätes und die erste Anfragekennung.

## Patentansprüche

1. Verfahren zur Übertragung einer Adresse (220; 222) eines ersten Netzwerkgeräts von dem ersten Netzwerkgerät über einen Netzwerkknoten (104) zu einem zweiten Netzwerkgerät (102), wobei das Verfahren die folgenden Schritte umfasst:
- Empfang (S1) eines ersten Anfragesignals (200) durch den Netzwerkknoten (104) von dem zweiten Netzwerkgerät (102), wobei das erste Anfragesignal (200) eine erste Anfragekennung (206) und eine Anfrage (204) nach der Adresse des ersten Netzwerkgeräts umfasst; und daraufhin
- Erzeugung (S2) eines zweiten Anfragesignals (202) durch den Netzwerkknoten (104), wobei das zweite Anfragesignal (202) die Anfrage (204) und eine zweite Anfragekennung (212) umfasst;
- Senden (S3) des zweiten Anfragesignals (202) an das erste Netzwerkgerät; und daraufhin
- Empfang (S4) eines ersten Antwortsignals (216) als Antwort auf das zweite Anfragesignal (202) durch den Netzwerkknoten (104), wobei das erste Antwortsignal (216) die Adresse (220; 222) des ersten Netzwerkgeräts und die zweite Anfragekennung (212) umfasst; und daraufhin
- Senden (S5) eines zweiten Antwortsignals (218) als Antwort auf das erste Anfragesignal (200) an das zweite Netzwerkgerät, wobei das zweite Antwortsignal (218) die Adresse (220; 222) des ersten Netzwerkgeräts und die erste Anfragekennung (206) umfasst.

2. Verfahren nach Anspruch 1,
wobei das erste Anfragesignal (200) eine Adresse (2080) des zweiten Netzwerkgeräts (102) umfasst,
wobei der Netzwerkknoten (104) die Adresse (208) des zweiten Netzwerkgeräts (102) und die erste Anfragekennung (206) speichert, und
wobei der Netzwerkknoten (104) die Adresse (208) des zweiten Netzwerkgeräts (102), die erste Anfragekennung (206) und die zweite Anfragekennung (212) miteinander verknüpft speichert.

3. Verfahren nach einem der vorhergehenden Ansprüche, wobei das zweite Anfragesignal (202) über einen weiteren Netzwerkknoten (106) an das erste Netzwerkgerät gesendet wird, und wobei das erste Antwortsignal (216) von dem weiteren Netzwerkknoten (106) empfangen wird.

4. Verfahren nach einem der vorhergehenden Ansprüche, wobei das erste Anfragesignal (200), das zweite Anfragesignal (202), das erste Antwortsignal (216) und das zweite Antwortsignal (218) Signale eines Protokolls gemäß der zweiten Schicht des OSI-Modells sind.

5. Verfahren nach einem der vorhergehenden Ansprüche, wobei in dem zweiten Netzwerkgerät (102) eine Adressdatenbank gespeichert ist, und wobei die Adresse (220; 222) des ersten Netzwerkgeräts der Adressdatenbank hinzugefügt wird, wenn die Adresse (220; 222) des ersten Netzwerkgeräts durch das zweite Netzwerkgerät (102) von dem Netzwerkknoten (104) empfangen wird.

6. Verfahren nach einem der vorhergehenden Ansprüche, wobei das zweite Anfragesignal (202) über mehrere Anschlüsse des Netzwerkknotens (104) ausgegeben wird, wobei an den Anschlüssen weitere Netzwerkgeräte und/oder Netzwerkknoten (104) angeschlossen sind.

7. Netzwerkknoten (104) für ein Netzwerk mit:
- Mitteln zum Empfang eines ersten Anfragesignals, wobei das erste Anfragesignal eine erste Anfragekennung und eine Anfrage nach der Adresse eines ersten Netzwerkgeräts umfasst;
- Mitteln zur Erzeugung eines zweiten Anfragesignals, wobei das zweite Anfragesignal die Anfrage und eine zweite Anfragekennung umfasst;
- Mitteln zum Senden des zweiten Anfragesignals;
- Mitteln zum Empfang eines ersten Antwortsignals als Antwort auf das zweite Anfragesignal, wobei das erste Antwortsignal die Adresse des ersten Netzwerkgeräts und die zweite Anfragekennung umfasst;
- Mitteln zum Senden eines zweiten Antwortsignals als Antwort auf das erste Anfragesignal, wobei das zweite Antwortsignal die Adresse des ersten Netzwerkgeräts und die erste Anfragekennung umfasst.

8. Computerprogrammprodukt mit Instruktionen, wobei die Instruktionen bei Ausführung einen Netzwerkknoten (104) zur Durchführung eines Verfahrens nach einem der Ansprüche 1-6 veranlassen.

## Geänderte Patentansprüche

### Geänderte Patentansprüche gemäss Regel 137(2) EPÜ.

**1.** Verfahren zur Übertragung einer Adresse (220; 222) eines ersten Netzwerkgeräts von dem ersten Netzwerkgerät über einen Netzwerkknoten (104) zu einem zweiten Netzwerkgerät (102), wobei sich das erste Netzwerkgerät und das zweite Netzwerkgerät (102) in unterschiedlichen Teilnetzwerken befinden, und wobei das Verfahren die folgenden Schritte umfasst:
- Empfang (S1) eines ersten Anfragesignals (200) durch den Netzwerkknoten (104) von dem zweiten Netzwerkgerät (102), wobei das erste Anfragesignal (200) eine erste Anfragekennung (206) und eine Anfrage (204) nach der Adresse des ersten Netzwerkgeräts umfasst, und wobei das erste Anfragesignal (200) ein Signal des DCP-Protokolls ist; und daraufhin
- Erzeugung (S2) eines zweiten Anfragesignals (202) durch den Netzwerkknoten (104), wobei das zweite Anfragesignal (202) die Anfrage (204) und eine zweite Anfragekennung (212) umfasst;
- Senden (S3) des zweiten Anfragesignals (202) an das erste Netzwerkgerät; und daraufhin
- Empfang (S4) eines ersten Antwortsignals (216) als Antwort auf das zweite Anfragesignal (202) durch den Netzwerkknoten (104), wobei das erste Antwortsignal (216) die Adresse (220; 222) des ersten Netzwerkgeräts und die zweite Anfragekennung (212) umfasst; und daraufhin
- Senden (S5) eines zweiten Antwortsignals (218) als Antwort auf das erste Anfragesignal (200) an das zweite Netzwerkgerät, wobei das zweite Antwortsignal (218) die Adresse (220; 222) des ersten Netzwerkgeräts und die erste Anfragekennung (206) umfasst;
wobei das erste Anfragesignal (200), das zweite Anfragesignal (202), das erste Antwortsignal (216) und das zweite Antwortsignal (218) Signale eines Protokolls gemäß der zweiten Schicht des OSI-Modells sind.

**2.** Verfahren nach Anspruch 1,
wobei das erste Anfragesignal (200) eine Adresse (2080) des zweiten Netzwerkgeräts (102) umfasst,
wobei der Netzwerkknoten (104) die Adresse (208) des zweiten Netzwerkgeräts (102) und die erste Anfragekennung (206) speichert, und
wobei der Netzwerkknoten (104) die Adresse (208) des zweiten Netzwerkgeräts (102), die erste Anfragekennung (206) und die zweite Anfragekennung (212) miteinander verknüpft speichert.

**3.** Verfahren nach einem der vorhergehenden Ansprüche, wobei das zweite Anfragesignal (202) über einen weiteren Netzwerkknoten (106) an das erste Netzwerkgerät gesendet wird, und wobei das erste Antwortsignal (216) von dem weiteren Netzwerkknoten (106) empfangen wird.

**4.** Verfahren nach einem der vorhergehenden Ansprüche, wobei in dem zweiten Netzwerkgerät (102) eine Adressdatenbank gespeichert ist, und wobei die Adresse (220; 222) des ersten Netzwerkgeräts der Adressdatenbank hinzugefügt wird, wenn die Adresse (220; 222) des ersten Netzwerkgeräts durch das zweite Netzwerkgerät (102) von dem Netzwerkknoten (104) empfangen wird.

**5.** Verfahren nach einem der vorhergehenden Ansprüche, wobei das zweite Anfragesignal (202) über mehrere Anschlüsse des Netzwerkknotens (104) ausgegeben wird, wobei an den Anschlüssen weitere Netzwerkgeräte und/oder Netzwerkknoten (104) angeschlossen sind.

**6.** Netzwerkknoten (104) für ein Netzwerk mit:
- Mitteln zum Empfang eines ersten Anfragesignals, wobei das erste Anfragesignal eine erste Anfragekennung und eine Anfrage nach der Adresse eines ersten Netzwerkgeräts umfasst, und wobei das erste Anfragesignal (200) ein Signal des DCP-Protokolls ist;
- Mitteln zur Erzeugung eines zweiten Anfragesignals, wobei das zweite Anfragesignal die Anfrage und eine zweite Anfragekennung umfasst;
- Mitteln zum Senden des zweiten Anfragesignals;
- Mitteln zum Empfang eines ersten Antwortsignals als Antwort auf das zweite Anfragesignal, wobei das erste Antwortsignal die Adresse des ersten Netzwerkgeräts und die zweite Anfragekennung umfasst;
- Mitteln zum Senden eines zweiten Antwortsignals als Antwort auf das erste Anfragesignal, wobei das zweite Antwortsignal die Adresse des ersten Netzwerkgeräts und die erste Anfragekennung umfasst;
wobei sich das erste Netzewrkgerät und das zweite Netzwerkgerät (102) in unterschiedlichen Teilnetzwerken befinden, und wobei das erste Anfragesignal (200), das zweite Anfragesignal (202), das erste Antwortsignal (216) und das zweite Antwortsignal (218) Signale eines Protokolls gemäß der zweiten Schicht des OSI-Modells sind.

**7.** Computerprogrammprodukt mit Instruktionen, wobei die Instruktionen bei Ausführung einen Netzwerkknoten (104) zur Durchführung eines Verfahrens nach einem der Ansprüche 1-5 veranlassen.
